(19) Europäisches Patentamt
European Patent Office
Office européen des brevets

(11) **EP 1 258 386 B1**

(12) **EUROPÄISCHE PATENTSCHRIFT**

(45) Veröffentlichungstag und Bekanntmachung des Hinweises auf die Patenterteilung:
**28.02.2007 Patentblatt 2007/09**

(51) Int Cl.:
***B60W 30/18*** *(2006.01)*

(21) Anmeldenummer: **02009298.7**

(22) Anmeldetag: **30.04.2002**

(54) **Verfahren zur Durchführung eines Anfahrvorgangs bei einem Antriebssystem**

Control method for a drive system under drive-off conditions

Procédé de commande du mise en marche pour un train de propulsion

(84) Benannte Vertragsstaaten:
**AT BE CH CY DE DK ES FI FR GB GR IE IT LI LU MC NL PT SE TR**

(30) Priorität: **18.05.2001 DE 10124656**

(43) Veröffentlichungstag der Anmeldung:
**20.11.2002 Patentblatt 2002/47**

(73) Patentinhaber: **ZF Sachs AG**
**97424 Schweinfurt (DE)**

(72) Erfinder: **John, Thomas, Dipl.-Ing.**
**97529 Sulzheim (DE)**

(56) Entgegenhaltungen:
EP-A- 1 072 820          WO-A-00/34069
US-A- 5 407 401          US-A- 5 662 548

**Beschreibung**

Die vorliegende Erfindung betrifft ein Verfahren zur Durchführung eines Anfahrvorgangs bei einem Antriebssystem, welches einen Antriebsmotor und eine vermittels einer automatisierten Kupplungsanordnung mit dem Antriebsmotor in Drehmomentübertragungsverbindung bringbare Getriebeanordnung umfasst.

In Kraftfahrzeugen ist es das Ziel, bei derartigen Antriebssystemen dafür zu sorgen, dass die Ansteuerung der verschiedenen Systembereiche derart erfolgt, dass die durchgeführten Anfahrvorgänge einen möglichst harmonischen Bewegungsablauf des Fahrzeugs erzeugen, bei welchem Stöße und in Zwischenphasen auftretende ungewünschte Beschleunigungen vermieden werden können. Hierzu ist beispielsweise aus der DE 199 58 076 A1 eine Vorgehensweise bekannt, bei der in Zuordnung zu einer Fahreranforderung, beispielsweise erzeugt durch Niederdrücken eines Gaspedals, eine sogenannte Einbremsdrehzahl bestimmt wird. Einer jeden Einbremsdrehzahl ist ein vorbestimmter Motordrehzahlverlauf zugeordnet, und durch Erzwingen einer Motordrehzahländerung durch entsprechende Ansteuerung der Kupplung zum Einrücken derselben wird eine möglichst sanfte Heranführung der Motordrehzahl an die sich erhöhende Getriebeeingangsdrehzahl erzeugt.

Die DE-A-19 958 076, als nächstliegender Stand der Technik augesehen, zeigt ein Verfahren zur Durchführung eines Anfahrvorgangs bei einem Antriebssystem, welches einen Antriebsmotor und eine vermittels einer automatisierten Kupplungsanordnung mit dem Antriebsmotor in Drehmomentübertragungs verbindung bringbare Getriebeanordnung umfasst.

Aus der EP 0 911 206 A2 ist es bekannt, dass beim Niederdrücken eines Fahrpedals des Fahrzeugs das dem Ausmaß des Niederdrückens entsprechende vom Fahrer angeforderte Motormoment erst mit einer vorgegebenen zeitlichen Verzögerung oder mit geringerer Änderungsrate angefahren wird.

Es ist die Aufgabe der vorliegenden Erfindung, ein Verfahren zur Durchführung eines Anfahrvorgangs bei einem Antriebssystem vorzusehen, mit welchem in komfortabler Art und Weise ein Fahrzeug bei einem Anfahrvorgang beschleunigt werden kann.

Gemäß der vorliegenden Erfindung wird diese Aufgabe gelöst durch ein Verfahren zur Durchführung eines Anfahrvorgangs bei einem Antriebssystem, welches einen Antriebsmotor und eine vermittels einer automatisierten Kupplungsanordnung mit dem Antriebsmotor in Drehmomentübertragungsverbindung bringbare Getriebeanordnung umfasst, wobei das Verfahren die Schritte umfasst: a) beruhend auf einer Fahreranforderung, Ermitteln eines Fahreranforderungsmotormomentes oder einer damit in Zusammenhang stehenden Größe, b) Verringern des im Schritt a) ermittelten Fahreranforderungsmotormomentes bzw. der damit in Zusammenhang stehenden Größe um einen Differenzbetrag zum Erhalt eines Vorgabemotormomentes oder einer damit in Zusammenhang stehenden Größe, c) Setzen des Vorgabemotormomentes bzw. der damit in Zusammenhang stehenden Größe als Sollgröße und Ansteuern des Antriebsmotors derart, dass dieser ein im Bereich des Vorgabemotormomentes liegendes Motormoment abgibt, d) Verstellen der Kupplungsanordnung in Richtung Einkuppeln, e) Setzen des Fahreranforderungsmotormomentes bzw. der damit in Zusammenhang stehenden Größe als Sollgröße und Ansteuern des Antriebsmotors derart, dass dieser ein im Bereich des Fahreranforderungsmotormomentes liegendes Motormoment abgibt.

Bei der erfindungsgemäßen Vorgehensweise wird also das durch entsprechende Anforderung vom Fahrer eigentlich geforderte Motordrehmoment zunächst nicht angefahren. Es wird lediglich ein verringertes Drehmoment angefahren und durch damit auch einhergehendes Einrücken der Kupplung die Drehzahl an der Getriebeeingangsseite erhöht. In einer zweiten Stufe wird dann für das vom Motor abzugebende Drehmoment das tatsächlich vom Fahrer angeforderte Drehmoment vorgegeben und durch entsprechende Ansteuerung der Motor in einen Zustand gebracht, in welchem er dieses Motormoment abgibt. Dabei dient im Wesentlichen die erste Phase, also die Phase, in der der Motor auf ein hinsichtlich des vom Fahrer geforderten Drehmomentes reduziertes Drehmoment eingestellt wird, zur Beschleunigung der Getriebeeingangsseite. Diese wird dabei in einen Zustand gebracht, in welcher die Drehzahl der Getriebeeingangsseite näherungsweise konstant ansteigt. In der zweiten Phase wird dann durch weiteres Erhöhen des Motormoments dafür gesorgt, dass auch auf der Antriebsseite, also im Bereich des Motors, ein entsprechender Anstieg der Drehzahl erreicht wird, so dass im Idealfall die Motordrehzahl und die Getriebeeingangsdrehzahl sich im gleichen Ausmaß erhöhen bzw. auch den gleichen Wert aufweisen.

Bei dem erfindungsgemäßen Verfahren ist vorzugsweise vorgesehen, dass der Differenzbetrag beruhend auf einer Motor-Trägheitsmomentengröße und einer mit einer Getriebeeingangsdrehzahländerung in Zusammenhang stehenden Größe ermittelt wird. Wie bereits angesprochen, ist es ein Ziel der verschiedenen Schritte der erfindungsgemäßen Vorgehensweise, die Motordrehzahl möglichst sanft an die Drehzahl der Getriebeeingangsseite heranzuführen. Wird dabei in der ersten Phase das vom Motor abgegebene Drehmoment um einen Wert verringert, der mit der Drehzahländerung an der Getriebeeingangsseite zusammenhängt und der überdies das im Motor vorhandene Trägheitsmoment berücksichtigt, so kann das in der zweiten Stufe hinzuzufügende Motordrehmoment sehr genau derart abgestimmt werden, dass auf der Motorseite die gleiche Drehzahländerungsrate erreicht wird, wie auf der Getriebeeingangsseite.

Um zu spontane Drehzahländerungen im Bereich des Antriebsmotors zu vermeiden, wird vorgeschlagen, dass im Schritt c) der Antriebsmotor derart angesteuert wird, dass die zeitliche Änderung des Motormomentes eine vorbestimmte Änderungsrate nicht übersteigt.

Weiter kann bei der vorliegenden Efindung vorgesehen sein, dass während des Schritts c) im Schritt d) die Kupplungsanordnung derart in Richtung Einkuppeln verstellt wird, dass ein über die Kupplungsanordnung übertragenes Kupplungsmoment dem Vorgabemotormoment angenähert wird. Hier kann beispielsweise auch derart vorgegangen werden, dass während des Schritts c) im Schritt d) die Kupplunganordnung derart angesteuert wird, dass die Motordrehzahl sich einer beruhend auf der Fahreranforderung bestimmten Fahreranforderungsmotordrehzahl annähert. Durch Abstimmung der Einrückbewegung der Kupplung auf das Vorgabemotormoment kann letztendlich erreicht werden, dass über die Kupplung genau dieses Motordrehmoment übertragen wird. Die Folge davon ist, dass der Antriebsmotor in einen Zustand im Wesentlichen konstanter Drehzahl gebracht wird, was dann der Fall ist, wenn das vom Motor abgegebene Drehmoment mit dem über die Kupplung übertragenen Drehmoment übereinstimmt. Hier kann beispielsweise vorgesehen sein, dass die Annäherung der Motordrehzahl an die Fahreranforderungsmotordrehzahl derart erfolgt, dass dann, wenn die Motordrehzahl im Bereich der Fahreranforderungsdrehzahl liegt, die zeitliche Änderung der Motordrehzahl im Bereich von Null liegt.

Zum Einleiten der zweiten Phase, also der Phase, in welcher das Motordrehmoment noch einmal erhöht wird, kann als Kriterium beispielsweise vorgesehen sein, dass nach dem Schritt c) der Schritt e) dann eingeleitet wird, wenn die Differenz zwischen der Motordrehzahl und einer Getriebeeingangsdrehzahl eine vorbestimmte Schwelle unterschreitet. Hier ist es vorteilhaft, wenn die Schwelle beruhend auf der zeitlichen Änderung der Drehzahl an der Getriebeeingangsseite bestimmt wird. Ändert sich die Getriebedrehzahl vergleichsweise stark, so kann die einer Differenzdrehzahl entsprechende Schwelle auf einen vergleichsweise großen Wert gesetzt werden. Ändert sich die Drehzahl an der Getriebeeingagsseite vergleichsweise langsam, so kann zum Optimieren des Anfahrvorgangs diese Schwelle bzw. Differenzdrehzahl kleiner gehalten werden, um der Drehzahl des Antriebsmotors ein noch sanfteres Einlaufen in die Drehzahl der Getriebeeingangsseite zu ermöglichen.

Wie bereits vorangehend angeführt, dient bei der erfindungsgemäßen Vorgehensweise die zweite Stufe der Momentenerhöhung im Wesentlichen dazu, den Motor noch einmal in Anpassung an die Änderung der Drehzahl an der Getriebeeingangsseite zu beschleunigen. Das zusätzliche Moment trägt also nicht mehr zur Beschleunigung des Fahrzeugs an sich bei, so dass das zur Beschleunigung tatsächlich genutzte Moment im Wesentlichen dem Vorgabemotormoment entspricht. Daher kann gemäß einem weiteren vorteilhaften Aspekt der vorliegenden Erfindung vorgesehen sein, dass im Schritt d) die Kupplungsanordnung derart angesteuert wird, dass dann, wenn das durch die Kupplungsanordnung übertragene Kupplungsmoment im Bereich des Vorgabemotormomentes liegt, die Kupplungsanordnung im Wesentlichen unverändert gehalten wird.

Die Erfindung wird nachfolgend mit Bezug auf die beiliegenden Zeichnungen detailliert beschrieben. Es zeigt:

Fig. 1    ein schematisches Blockschaltbild eines Antriebssystems, bei welchem die erfindungsgemäße Vorgehensweise zum Einsatz gelangen kann;

Fig. 2    den zeitlichen Verlauf der Motordrehzahl und der Drehzahl an der Getriebeeingangsseite bei Durchführung der erfindungsgemäßen Vorgehensweise;

Fig. 3    den zeitlichen Verlauf des Motormomentes und des Kupplungsmomentes bei Durchführung der erfindungsgemäßen Vorgehensweise.

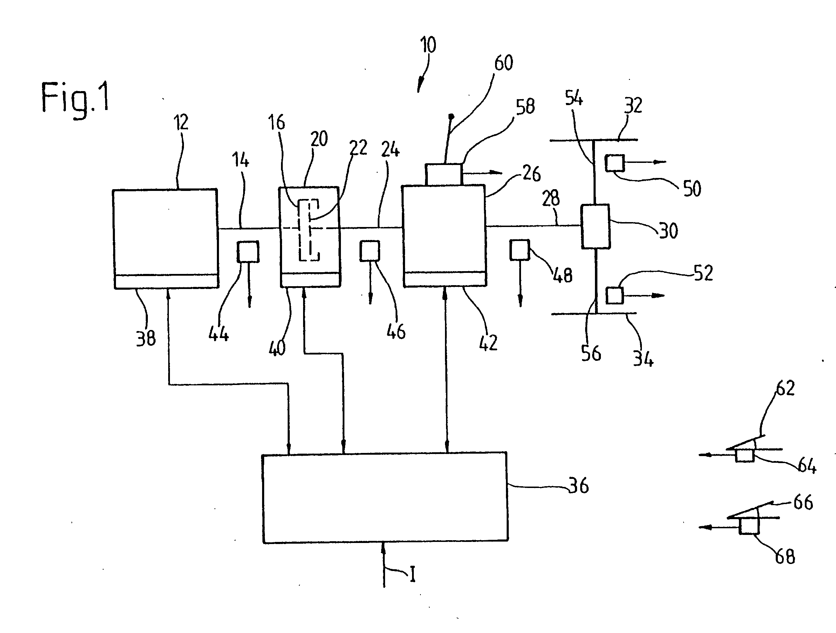

Zunächst wird mit Bezug auf die Figur 1 allgemein ein Antriebssystem beschrieben, bei welchem das erfindungsgemäße Konzept angewandt werden kann. Das Antriebssystem 10 umfasst einen Motor bzw. ein Antriebsaggregat 12, beispielsweise eine Brennkraftmaschine 12, das über eine Antriebswelle 14 mit einer Eingangsseite 16 einer automatisierten Kupplungsanordnung 20, beispielsweise Reibungskupplung, in Verbindung steht. Eine Ausgangsseite 22 der Kupplungsanordnung 20 steht über eine Getriebeeingangswelle 24 in Antriebsverbindung mit einer automatisierten Getriebeanordnung 26. Deren Ausgangswelle 28 treibt über ein Differenzial 30 angetriebene Räder 32, 34 an. Das Antriebsaggregat 12, die Kupplungsanordnung 20 und die Getriebeanordnung 26 stehen unter der Ansteuerung einer Ansteuervorrichtung 36. Diese Ansteuervorrichtung 36 steht im Datenaustausch mit einer Leistungsstellanordnung 38 des Antriebsaggregats, um durch die Zuleitung von Ansteuersignalen oder Befehlen zur Leistungsstellanordnung 38 die Leistungsabgabe beziehungsweise die Drehzahl des Antriebsaggregats 12 zu steuern beziehungsweise zu regeln. Es sei darauf verwiesen, dass die Leistungsstellanordnung 38 jeglichen Bereich eines Antriebsaggregats umfasst, in welchem ein Einfluss auf dessen Drehzahl beziehungsweise Leistungsabgabe genommen werden kann, beispielsweise das Einspritzsystem, das Drosselsystem, das Zündsystem, das Nockensystem usw. Selbstverständlich liefert die Leistungsstellanordnung 38 Information an die Ansteuervorrichtung 36, welche den Leistungsstellzustand des Antriebsaggregats 12 bezeichnet.

Ferner steht die Ansteuervorrichtung 36 mit einer Stellgliedanordnung 40 der automatisierten Kupplungsanordnung 20 in Verbindung, um durch Zufuhr entsprechender Stellsignale zu dieser die Kupplungsanordnung 20 zwischen einer eingerückten und einer ausgerückten Kupplungsstellung zu verstellen. Auch die Stellgliedanordnung 40 kann zur Ansteuervorrichtung 36 Information liefern, welche den momentanen Stellzustand der Kupplungsanordnung bezeichnet.

Weiter liefert die Ansteuervorrichtung 36 Ansteuersignale zur einer Stellgliedanordnung 42 der Getriebeanordnung 26. Diese Ansteuersignale führen zur Durchführung von Schaltvorgängen innerhalb der Getriebeanordnung 26. Auch hier wird der Ansteuervorrichtung 36 wieder Information rückgeliefert, welche den momentanen Stellzustand der Getriebeanordnung 26 bezeichnet. Die Ansteuervorrichtung 36 erhält weiter Information I von verschiedenen Sensoren, beruhend auf welcher Information die Ansteuervorrichtung 36 den Gesamtbetriebszustand des Fahrzeugs ermitteln kann. So ist beispielsweise ein Drehzahlsensor 44 vorgesehen, welcher die Drehzahl der Antriebswelle 14 erfasst. Es sei darauf verwiesen, dass, sofern hier von der Erfassung der Drehzahl die Rede ist, dies selbstverständlich auch die Erfassung jeglicher die Drehzahl charakterisierender Information umfasst, die dann beispielsweise in der Ansteuervorrichtung 36 zur tatsächlichen Ermittlung der Drehzahl an sich verarbeitet wird. Ferner ist ein Drehzahlsensor 46 vorgesehen, welcher die Drehzahl der Getriebeeingangswelle 24 erfasst, sowie ein Drehzahlsensor 48, welcher die Drehzahl der Getriebeausgangswelle 28 erfasst. Weiter sind Drehzahlsensoren 50, 52 vorgesehen, welche die Drehzahl der angetriebenen Räder 32, 34 beziehungsweise von diese antreibenden Wellen 54, 56 erfassen. Beruhend auf diesen beiden Sensorausgaben beziehungsweise beruhend auf der Ausgabe des Drehzahlsensors 48 kann die Fahrzeuggeschwindigkeit errechnet werden; d.h. diese Sensorausgaben der Sensoren 48, 50, 52 beinhalten Information über die Fahrzeuggeschwindigkeit.

Weiter ist ein Schaltsensor 58 vorgesehen, welcher eine Betätigung eines Schalthebels 60 erfasst und entsprechende Information I zur Ansteuervorrichtung 36 liefert. Beruhend auf dieser Information erkennt die Ansteuervorrichtung 36, welchen Schaltvorgang ein Fahrer durchführen will und erzeugt dann zum geeigneten Zeitpunkt und gegebenenfalls unter Berücksichtigung der weiteren den Fahrzustand repräsentierenden Information einen geeigneten Ansteuerbefehl für die Getriebeanordnung 26. Es sei darauf hingewiesen, dass an Stelle der Erfassung der Schalthebelbetätigung die Durchführung eines Schaltvorgangs auch nach Art eines Automatikgetriebes beruhend auf der Fahrsituation erfolgen kann.

Bei dem Antriebssystem 10 ist ferner ein Gas- oder Fahrpedal 62 mit einem zugeordneten Fahrpedalsensor 64 vorgesehen, dessen Ausgangssignal das Betätigungsausmaß des Fahrpedals repräsentiert. Weiter ist ein Bremspedal 66 vorgesehen, dem ebenfalls ein Sensor 68 zugeordnet ist. Das Ausgangssignal dieses Bremspedalsensors 68 repräsentiert das Betätigungsausmaß des Bremspedals 66.

Beruhend auf all diesen Sensoreingaben und möglicherweise noch weiteren Sensoreingaben, beispielsweise von einem Umgebungstemperatursensor, einem Kühlmitteltemperatursensor, einem Gierbewegungssensor und dergleichen, erzeugt die Ansteuervorrichtung 36 verschiedene Ansteuerbefehle oder Ansteuervorgaben, welche dann in den verschiedenen anzusteuernden Aggregaten oder Komponenten, also der Leistungsstellanordnung 38, der Stellgliedanordnung 40 und der Stellgliedanordnung 42 umgesetzt werden, d.h. zur Durchführung von Stellvorgängen im Antriebsaggregat 12, in der Kupplungsanordnung 20 beziehungsweise in der Getriebeanordnung 26 führen. Diese Ansteuervorgaben werden in der Ansteuervorrichtung 36 in einem Prozessor ermittelt, in welchem ein entsprechendes Steuerprogramm abläuft, das als Eingabe die verschiedenen Sensoreingaben I empfängt und das als Ausgabe eine Ansteuervorgabe erzeugt, die entweder als Ansteuerbefehl direkt zu den verschiedenen Stellbereichen 38, 40, 42 geleitet wird, oder die nachfolgend noch in der Ansteuervorrichtung 36 in einen jeweiligen Ansteuerbefehl umgesetzt und dann erst zu den Stellbereichen geleitet wird.

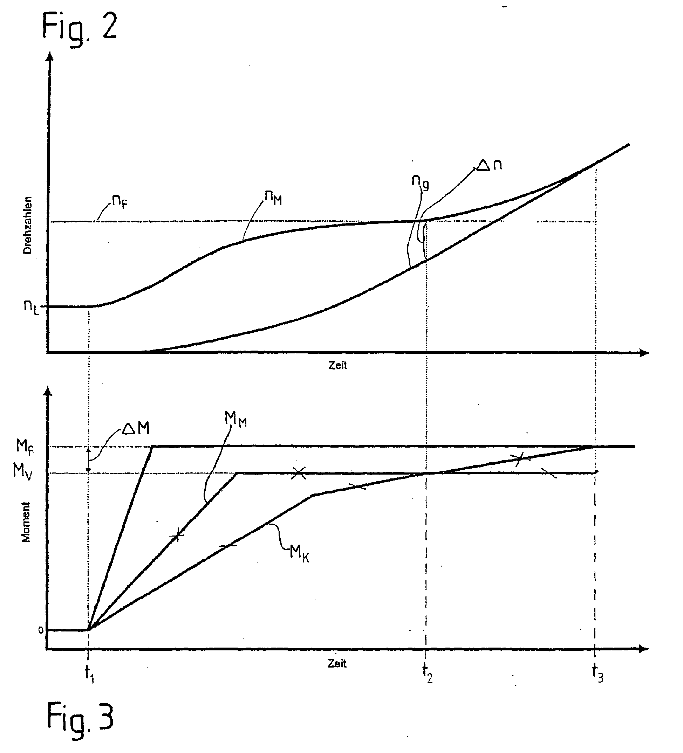

Im Folgenden wird mit Bezug auf die Figuren 2 und 3 eine erfindungsgemäße Vorgehensweise beschrieben, mit welcher bei dem mit Bezug auf die Figur 1 beschriebenen Antriebssystem 10 ein Anfahrvorgang durchgeführt werden kann. Es sei beispielsweise angenommen, dass zum Zeitpunkt $t_1$ der Fahrer durch Niederdrücken des Gaspedals 62 zu erkennen gibt, dass er das Fahrzeug anzufahren wünscht, beispielsweise nach einer Stillstandphase an einer Ampel. In diesem Zustand ist zunächst in der Getriebeanordnung 26 ein Gang eingelegt, beispielsweise der erste Gang, und die Kupplungsanordnung 20 ist durch entsprechende Ansteuerung der Stellgliedanordnung 40 in einem ausgerückten Zustand. Das Antriebsaggregat 12 dreht mit der Leerlaufdrehzahl $n_L$ und gibt auf Grund mangelnder Belastung im Wesentlichen kein Drehmoment ab.

Wenn zum Zeitpunkt $t_1$ der Fahrer das Gaspedal 62 in einem bestimmten Ausmaß niederdrückt, so wird in Zuordnung zu diesem Betätigungsausmaß eine dieser Fahreranforderung entsprechende Fahreranforderungsdrehzahl $n_F$ ermittelt, welche letztendich mit der Stärke des Niederdrückens des Gaspedals 62 korrespondiert. Entsprechend wird ein Fahreranforderungsmotormoment $M_F$ ermittelt. In Zuordnung zu diesem Fahreranforderungsmotormoment $M_F$ wird des Weiteren ein im Folgenden noch detaillierter erläutertes Differenzmoment $\Delta M$ ermittelt. Durch Subtrahieren des Differenzmomentes $\Delta M$ von dem Fahreranforderungsmotormoment $M_F$ wird ein Vorgabemotormoment $M_V$ ermittelt, das etwas unter dem Fahreranforderungsmotormoment $M_F$ liegt. Beginnend ab dem Zeitpunkt $t_1$ wird dann durch entsprechende Ansteuerung der Leistungsstellanordnung 38 das Motormoment gemäß der Linie $M_M$ erhöht. Für den Gradienten des Motormomentes ist hier eine bestimmte Schwelle gesetzt, die zum Vermeiden einer zu raschen Erhöhung der Motordrehzahl $n_M$ vorgegeben ist. Dieser Maximalwert des Gradienten des Motormomentes kann beispielsweise unabhängig von der Fahreranforderung, also unabhängig von der Stärke des Niederdrückens des Gaspedals 62 vorgegeben sein. Ab dem Zeitpunkt $t_1$ nimmt also das Motormoment gemäß der Kurve $M_M$ näherungsweise linear zu, bis das Vorgabemotormoment $M_V$ erreicht ist. Bei Erreichen dieses Vorgabemotormoments $M_V$ wird zunächst dann durch entsprechende Ansteuerung der Leistungsstellanordnung 38 dafür gesorgt, dass das Motormoment auf diesem Wert näherungsweise konstant gehalten wird.

Gleichzeitig mit dem Beginn der Erhöhung des Motormomentes wird zum Zeitpunkt $t_1$ begonnen, die Kupplungsanordnung 20 in Richtung Einkuppeln zu verstellen, indem entsprechende Ansteuersignale an die Stellgliedanordnung 40 ausgegeben werden. Das Kupplungsmoment nimmt also gemäß der Kurve $M_K$ zu. Die Ansteuerung der Kupplungsanordnung 20 erfolgt dabei in derartiger Weise, dass durch zunehmende Belastung des Antriebsaggregats bzw. Motors 12 der mit der Momentenerhöhung einhergehende Drehzahlanstieg abgebremst wird und, wie in Figur 2 erkennbar, die Motordrehzahl $n_M$ sich der Fahreranforderungsdrehzahl $n_F$ in asymptotischer Art und Weise annähert. Zum Zeitpunkt $t_2$, zu welchem, wie den Kurven $M_M$ und $M_K$ entnehmbar, das Motormoment und das Kupplungsmoment näherungsweise den gleichen Wert des Vorgabemotormomentes $M_V$ aufweisen, liegt an der Motorseite ein Zustand vor, in welchem auf Grund der Momentengleichheit die Drehzahl $n_M$ näherungsweise konstant ist. In diesem Zustand besteht zwischen der Motordrehzahl $n_M$ und der Drehzahl $n_G$ an der Getriebeeingangsseite, d.h. der Drehzahl der Getriebeeingangswelle 24, eine Differenz $\Delta n$.

In der vorangehend beschriebenen ersten Phase des Anfahrvorgangs wird also zunächst dafür gesorgt, dass das Motormoment auf einen Wert im Bereich eines Vorgabemotormoments $M_V$ gebracht wird, dass die Kupplungsanordnung 20 in einen Stellzustand gebracht wird, in welcher sie ebenfalls näherungsweise in der Lage ist, dieses Vorgabemotormoment $M_V$ zu übertragen, und dass am Ende dieser Phase die Änderung der Motordrehzahl $n_M$ vergleichsweise klein ist, beispielsweise etwa bei Null liegt. Während dieser Phase nimmt die Drehzahl $n_G$ der Getriebeeingangswelle 24 allmählich zu, wobei, wie auch in Fig. 2 erkennbar, auch der Gradient der Drehzahl $n_G$ der Getriebeeingangswelle 24 zunimmt. Wie im Folgenden noch dargelegt, ist es das Ziel der vorliegenden Erfindung, dafür zu sorgen, dass bei zunehmender Annäherung der Drehzahl $n_M$ des Motors 12 an die Drehzahl $n_G$ der Getriebeeingangswelle 24, diese beiden Größen näherungsweise den gleichen Verlauf haben, also näherungsweise auch den gleichen Gradienten aufweisen, um einen Einkuppelstoß zu vermeiden.

Um dies zu erreichen wird, wie bereits vorangehend dargestellt, von dem durch den Fahrer eigentlich durch entsprechende Gaspedalbetätigung angeforderten Fahreranforderungsmotormoment $M_F$ das Differenzmoment $\Delta M$ zunächst subtrahiert. Das verbleibende Vorgabemotormoment $M_V$ ist dann letztendlich dasjenige Motormoment, welches in den Antriebsstrang zur Beschleunigung eines Fahrzeugs weitergeleitet wird. Das Differenzmoment $\Delta M$ gibt eine Größe vor bzw. entspricht einem Motormoment, das in der zweiten Phase des Anfahrvorgangs, wie im Folgenden beschrieben, dazu genutzt wird, den Motor 12 zu beschleunigen, d.h. dessen Drehzahl zu erhöhen, und zwar derartig, dass bei der Motordrehzahl $n_M$ der gleiche Gradient vorliegt, wie bei der Drehzahl $n_G$ der Getriebeeingangswelle 24. Dies bedeutet letztendlich, dass idealerweise das Differenzmoment $\Delta M$ derart bestimmt wird, dass durch die in der zweiten Phase des Anfahrvorgangs auftretende Erhöhung des Motormomentes von dem Vorgabemotormoment $M_V$ auf das Fahreranforderungsmotormoment $M_F$ bei in ihrer Kupplungsstellung näherungsweise konstant gehaltener Kupplungsanordnung 20 der Motor 12 die gewünschte Beschleunigung bzw. Erhöhung seiner Drehzahländerungsrate erfährt.

Zur Bestimmung des Differenzmomentes $\Delta M$ wird dabei wie folgt vorgegangen: Man erkennt zunächst in der Figur 2, dass etwa zum Zeitpunkt $t_2$ die Motordrehzahl $n_M$ näherungsweise konstant ist. Um also die Motordrehzahl $n_M$ zu erhöhen, d.h. der Kurve $n_M$ einen von Null verschiedenen Gradienten zu verleihen, ist es erforderlich, ein zusätzliches Motormoment bereitzustellen, das bestimmt ist durch das Trägheitsmoment J des Motors und die gewünschte Änderung der Motordrehzahl. Wie man der Figur 2 entnehmen kann und wie vorangehend bereits ausgeführt, ist es das Ziel, den Gradienten der Motordrehzahl so einzustellen, dass er dem Gradienten der Drehzahl $n_G$ der Getriebeeingangswelle 24 entspricht. Daraus resultiert, dass für das nach dem Zeitpunkt $t_2$ hinzuzufügende Motormoment, welches letztendlich dem Differenzmoment $\Delta M$ entspricht, folgende Gleichung vorgesehen ist:

$$\Delta M = J * dn_G/dt$$

Idealerweise wäre hier also zur Bestimmung des Differenzmomentes $\Delta M$ der Gradient der Drehzahl $n_G$ der Getriebeeingangswelle 24 in der Phase nach dem Zeitpunkt $t_2$ vorzusehen. Da in dieser Phase, wie in Fig. 3 erkennbar, die Kupplungsanordnung 20 näherungsweise in ihrer Einrückstellung unverändert gehalten wird, tritt auch keine Änderung des Kupplungsmomentes und somit auch keine Änderung des Gradienten der Drehzahl $n_G$ der Getriebeeingangswelle 24 auf. D.h., nach dem Zeitpunkt $t_2$ ändert sich die Drehzahl $n_G$ der Getriebeeingangswelle 24 näherungsweise konstant, was eine entsprechend konstante Beschleunigung des Fahrzeugs bedeutet.

Grundsätzlich ist zum Zeitpunkt $t_1$ diese Drehzahländerung aber noch nicht exakt bekannt. Es kann daher beispielsweise derart vorgegangen werden, dass zum Zeitpunkt $t_1$ für diese zeitliche Änderung der Drehzahl $n_G$ der Getriebeeingangswelle 24 ein Ausgangswert vorgegeben wird, der dann beruhend auf der Kurve $n_G$ sukzessive verändert wird, so dass auch nach dem Zeitpunkt $t_1$ das Differenzmoment $\Delta M$ ständig angepasst wird. Da der Drehzahlgradient der Getriebeeingangswelle 24 zunimmt, nimmt auch das Differenzmoment $\Delta M$ zu. Hier kann beispielsweise vorgesehen sein, dass diese Anpassung nur für eine vorbestimmte Zeitdauer nach dem Zeitpunkt $t_1$ vorgenommen wird, oder dass dann, wenn ein Zustand erreicht ist, in dem das tatsächlich abgegebene Motormoment einen zu einem bestimmten Zeitpunkt vorgegebenen Wert des Vorgabemotormomentes erreicht, die Anpassung eingestellt wird und dann mit einem unveränderten Wert des Differenzmomentes $\Delta M$ weitergearbeitet wird. Grundsätzlich ist es jedoch auch möglich, beruhend auf dem Ausmaß der Betätigung des Fahrpedals 62 und dem zugeordneten Fahreranforderungsmotormoment $M_F$ und beruhend auf der nach dem Zeitpunkt $t_1$ sich einstellenden Änderung der Drehzahl $n_G$ der Getriebeeinganswelle 24, also der Fahrzeugreaktion, zu bestimmen, in welchem Umfeld das Fahrzeug sich bewegt. So kann beispielsweise im Versuch ermittelt werden, wie für ein bestimmtes Terrain, also abfallende Straße, ebene Straße oder ansteigende Straße, bei einem bestimmten Fahreranforderungsmotormoment sich die Drehzahl an der Getriebeeingansseite ändern sollte. Es kann hier letztendlich ein Kennfeld generiert werden, bei dem als Eingangsgröße das Fahreranforderungsmotormoment $M_F$ und eine am Beginn des Anfahrvorgangs sich ergebende Änderung der Drehzahl $n_G$ der Getriebeeingaswelle 24 verwendet werden und in Zuordnung zu diesen Eingangsgrößen dann eine für die Phase nach dem Zeitpunkt $t_2$ zu erwartende zeitliche Änderung der Drehzahl $n_G$ der Getriebeeingswelle 24 ausgelesen wird. Diese zeitliche Änderung geht dann neben dem Motorträgheitsmoment in die vorangehend angegebene Formel zur Bestimmung des Differenzmomentes $\Delta M$ ein.

Ist also der Anfahrvorgang bis zum Zeitpunkt $t_2$ fortgeschritten, also einem Zeitpunkt, in dem zwischen den beiden Drehzahlen $n_M$ und $n_G$ die Differenz $\Delta n$ erreicht worden ist, wobei diese Differenz $\Delta n$ als Schwelle betrachtet wird, so wird die nächste Phase des Anfahrvorgangs begonnen. Nach dem Zeitpunkt $t_2$ wird, wie bereits ausgeführt, die Kupplungsanordnung 20 in näherungsweise unveränderter Stellung gehalten, so dass auch das über die Kupplungsanordnung 20 übertragene Drehmoment sich im Wesentlichen nicht mehr ändert. D.h., durch dieses über die Kupplungsanordnung 20 übertragene Drehmoment ist dann auch die bei einem Fahrzeug erreichbare Beschleunigung im Anfahrvorgang vorgegeben. Es wird jedoch nunmehr durch entsprechende Ansteuerung der Leistungsstellanordnung 38 das Motormoment erhöht, und zwar um die bereits angesprochene und so wie vorangehend beschrieben bestimmte Größe des Differenzmomentes $\Delta M$. Diese Erhöhung des Motormoments führt nun dazu, dass ausgehend von dem Zustand, in welchem die Änderungsrate der Motordrehzahl $n_M$ näherungsweise Null war, der Motor beschleunigt wird, d.h. die Drehzahl ansteigt. Auf Grund der vorangehend detailliert beschriebenen Bestimmung des Differenzmomentes $\Delta M$ ändert sich der Gradient der Motordrehzahl $n_M$ derart, dass er an den in dieser Phase vorliegenden Gradienten der Drehzahl $n_G$ der Getriebeeingangswelle 24 angepasst ist. Am Ende dieser Phase, also zum Zeitpunkt $t_3$, haben dann die Motordrehzahl $n_M$ und die Drehzahl $n_G$ der Getriebeeingangswelle 24 idelaerweise den gleichen Gradienten. Da diese Gradientenanpassung durch allmähliche Erhöhung des Motormomentes erfolgt, wird das Auftreten von Einkuppelstößen vermieden und das in Figur 2 erkennbare asymptotenartige Einlaufen der Drehzahl $n_M$ in die Drehzahl $n_G$ der Getriebeeingangswelle 24 erzielt.

Am Ende dieser zweiten Phase, also zum Zeitpunkt $t_3$, zu welchem das Motormoment das Fahreranforderungsmotormoment $M_F$ erreicht hat, ist eine weiter beschleunigte Drehzahlerhöhung des Motors 12 nicht erforderlich und wird auch nicht auftreten, da auch das Motormoment ab dieser Phase nicht mehr erhöht wird. Da idealerweise in der Phase zwischen den Zeitpunkten $t_2$ und $t_3$ nicht nur die Gradienten der verschiedenen Drehzahlen einander angepasst worden sind, sondern auch die Drehzahlen an sich einander angeglichen worden sind, kann nach dem Zeitpunkt $t_3$ durch entsprechende Ansteuerung der Stellgliedanordnung 40 die Kupplungsanordnung 20 dann, wie durch Strichlinien angedeutet, in ihren vollständig eingerückten Zustand gebracht werden.

Durch die erfindungsgemäße zweistufige Erhöhung des Motormoments wird erreicht, dass die Motordrehzahl $n_M$ und die Getriebedrehzahl $n_G$ in ihren Änderungen einander angeglichen werden. Dabei sind die in den Figuren 2 und 3 dargestellten Verläufe für einen beispielhaften Fall dargestellt. So ist es selbstverständlich möglich, dass zu dem Zeitpunkt $t_2$, zu dem die Differenz zwischen den Drehzahlen $n_M$ und $n_G$ die Drehzahlschwelle $\Delta n$ unterschritten hat, das Kupplungsmoment noch nicht das Vorgabemotormoment $M_v$ erreicht hat. Dies bedeutet, dass zum Zeitpunkt $t_2$ dann die Motordrehzahl $n_M$ auf Grund der Tatsache, dass das über die Kupplungsanordnung 20 übertragene Moment kleiner ist als das Motormoment, einen Gradienten aufweist, der etwas größer als Null ist. Dies kann jedoch dann durch in der Phase zwischen den Zeitpunkten $t_2$ und $t_3$ vorgenommene Korrekturstellbewegungen im Bereich der Kupplungsanordnung 20 ausgeglichen werden.

Des Weiteren sei darauf hingewiesen, dass die Differenzdrehzahlschwelle $\Delta n$ vorzugsweise in Abhängigkeit vom Gradienten der Drehzahl $n_G$ der Getriebeeingangswelle 24 bestimmt wird. Liegt ein vergleichsweise großer Gradient vor, d.h. steigt die Drehzahl der Getriebeeingangswelle 24 stark an, so kann die zweite Phase bereits zu einem früheren Zeitpunkt, also bei noch größerer Drehzahldifferenz $\Delta n$ eingeleitet werden, um für das Heranführen der Drehzahl $n_M$ des Motors 12 an die Drehzahl $n_G$ der Getriebeeingangswelle 24 ausreichend Zeit zur Verfügung zu haben. Ferner sei noch darauf hingewiesen, dass in der Phase zwischen den zwei Zeitpunkten $t_1$ und $t_2$ die Kupplungsanordnung 20 bzw. die Stellgliedanordnung 40 derselben derart angesteuert werden kann, dass eine von der Differenz zwischen der Motordrehzahl $n_M$ und der Fahreranforderungsdrehzahl $n_F$ abhängige Momentenveränderung bei der Kupplung vorgenommen wird. Es wird auf diese Art und Weise die sanfte, asymptotenartige Heranführung der Drehzahl $n_M$ an die Fahreranforderungsdrehzahl $n_F$ erhalten. Ferner sei noch darauf hingewiesen, dass dann, wenn in der Phase zwischen den Zeitpunkten $t_1$ und $t_2$ die Motordrehzahl $n_M$ die Fahreranforderungsdrehzahl $n_F$ überschreitet, durch entsprechende Verminderung des Motormomentes dafür gesorgt wird, dass ein entsprechendes Weglaufen der Drehzahl nach oben verhindert wird und die Motordrehzahl $n_M$ in den gewünschten Bereich zurückgebracht wird.

**Patentansprüche**

1. Verfahren zur Durchführung eines Anfahrvorgangs bei einem Antriebssystem, welches einen Antriebsmotor (12) und eine vermittels einer automatisierten Kupplungsanordnung (20) mit dem Antriebsmotor (12) in Drehmomentübertragungsverbindung bringbare Getriebeanordnung (26) umfasst, wobei das Verfahren die Schritte umfasst:

   a) beruhend auf einer Fahreranforderung, Ermitteln eines Fahreranforderungsmotormomentes ($M_F$) oder einer damit in Zusammenhang stehenden Größe,
   b) Verringern des im Schritt a) ermittelten Fahreranforderungsmotormomentes ($M_F$) bzw. der damit in Zusammenhang stehenden Größe um einen Differenzbetrag ($\Delta M$) zum Erhalt eines Vorgabemotormomentes ($M_V$) oder einer damit in Zusammenhang stehenden Größe,
   c) Setzen des Vorgabemotormomentes ($M_V$) bzw. der damit in Zusammenhang stehenden Größe als Sollgröße und Ansteuern des Antriebsmotors (12) derart, dass dieser ein im Bereich des Vorgabemotormomentes ($M_V$) liegendes Motormoment abgibt,
   d) Verstellen der Kupplungsanordnung (20) in Richtung Einkuppeln,
   e) Setzen des Fahreranforderungsmotormomentes ($M_F$) bzw. der damit in Zusammenhang stehenden Größe als Sollgröße und Ansteuern des Antriebsmotors (12) derart, dass dieser ein im Bereich des Fahreranforderungsmotormomentes ($M_F$) liegendes Motormoment abgibt.

2. Verfahren nach Anspruch 1,
   **dadurch gekennzeichnet, dass** der Differenzbetrag ($\Delta M$) beruhend auf einer Motor-Trägheitsmomentengröße ($J$) und einer mit einer Getriebeeingangsdrehzahländerung ($dn_G/dt$) in Zusammenhang stehenden Größe ermittelt wird.

3. Verfahren nach Anspruch 1 oder 2,
   **dadurch gekennzeichnet, dass** im Schritt c) der Antriebsmotor (12) derart angesteuert wird, dass die zeitliche Änderung des Motormomentes eine vorbestimmte Änderungsrate nicht übersteigt.

4. Verfahren nach einem der Ansprüche 1 bis 3,
   **dadurch gekennzeichnet, dass** während des des Schritts c) im Schritt d) die Kupplungsanordnung (20) derart in Richtung Einkuppeln verstellt wird, dass ein über die Kupplungsanordnung (20) übertragenes Kupplungsmoment ($M_K$) dem Vorgabemotormoment ($M_V$) angenähert wird.

5. Vefahren nach einem der Ansprüche 1 bis 4,
   **dadurch gekennzeichnet, dass** während des Schritts c) im Schritt d) die Kupplunganordnung (20) derart angesteuert wird, dass die Motordrehzahl ($n_M$) sich einer beruhend auf der Fahreranforderung bestimmten Fahreranforderungsmotordrehzahl ($n_F$) annähert.

6. Verfahren nach Anspruch 5,
   **dadurch gekennzeichnet, dass** die Annäherung der Motordrehzahl ($n_M$) an die Fahreranforderungsmotordrehzahl ($n_F$) derart erfolgt, dass dann, wenn die Motordrehzahl ($n_M$) im Bereich der Fahreranforderungsdrehzahl ($n_F$) liegt, die zeitliche Änderung der Motordrehzahl ($n_M$) im Bereich von Null liegt.

7. Verfahren nach einem der Ansprüche 1 bis 6,
   **dadurch gekennzeichnet, dass** nach dem Schritt c) der Schritt e) dann eingeleitet wird, wenn die Differenz ($\Delta n$) zwischen der Motordrehzahl ($n_M$) und einer Getriebeeingangsdrehzahl ($n_G$) eine vorbestimmte Schwelle unterschreitet.

8. Verfahren nach Anspruch 7,
   **dadurch gekennzeichnet, dass** die Schwelle beruhend auf einer zeitlichen Änderung der Getriebeeingangsdrehzahl ($n_G$) bestimmt wird.

9. Verfahren nach Anspruch 8,
   **dadurch gekennzeichnet, dass** bei größerer zeitlicher Änderung der Getriebeeingangsdrehzahl ($n_G$) die Schwelle auf einen höheren Wert gesetzt wird.

10. Verfahren nach einem der Ansprüche 1 bis 9,
    **dadurch gekennzeichnet, dass** im Schritt d) die Kupplungsanordnung (20) derart angesteuert wird, dass dann, wenn das durch die Kupplungsanordnung (20) übertragene Kupplungsmoment ($M_K$) im Bereich des Vorgabemotormomentes ($M_V$) liegt, die Kupplungsanordnung (20) im Wesentlichen unverändert gehalten wird.

**Claims**

1. Method for carrying out a start-up procedure in a drive system which comprises a drive motor (12) and a transmission arrangement (26) which can be connected by means of an automated clutch arrangement (20) to the drive motor (12) so as to transmit torque, with the method comprising the following steps:

   a) establishing a driver request motor torque ($M_F$) or a variable associated with it on the basis of a driver request,

   b) reducing the driver request motor torque ($M_F$) or the variable associated with it which is established in step a) by a difference amount ($\Delta M$) in order to obtain a prespecified motor torque ($M_V$) or a variable associated with it,

   c) setting the prespecified motor torque ($M_V$) or the variable associated with it as a setpoint variable and activating the drive motor (12) in such a way that it outputs a motor torque which is in the region of the prespecified motor torque ($M_V$),

   d) adjusting the clutch arrangement (20) in the direction of engagement,

   e) setting the driver request motor torque ($M_F$) or the variable associated with it as a setpoint variable and activating the drive motor (12) in such a way that it outputs a motor torque which is in the region of the driver request motor torque ($M_F$).

2. Method according to Claim 1, **characterized in that** the difference amount ($\Delta M$) is established on the basis of a variable (J) for the moment of inertia of the motor and a variable which is associated with a change ($dn_G/dt$) in the transmission input rotational speed.

3. Method according to Claim 1 or 2, **characterized in that** the drive motor (12) is activated in step c) in such a way that the change in the motor torque over time does not exceed a predetermined rate of change.

4. Method according to one of Claims 1 to 3, **characterized in that**, during step c), the clutch arrangement (20) is adjusted in the direction of engagement in step d) in such a way that a clutch torque ($M_K$) which is transmitted by means of the clutch arrangement (20) approaches the prespecified motor torque ($M_V$).

5. Method according to one of Claims 1 to 4, **characterized in that**, during step c), the clutch arrangement (20) is activated in step d) in such a way that the motor rotational speed ($n_M$) approaches a driver request motor rotational speed ($n_F$) which is determined on the basis of the driver request.

6. Method according to Claim 5, **characterized in that** the motor rotational speed ($n_M$) approaches the driver request motor rotational speed ($n_F$) in such a way that, if the motor rotational speed ($n_M$) is in the region of the driver request rotational speed ($n_F$), the change in the motor rotational speed ($n_M$) over time is in the region of zero.

7. Method according to one of Claims 1 to 6, **characterized in that**, after step c), step e) is initiated if the difference ($\Delta n$) between the motor rotational speed ($n_M$) and a transmission input rotational speed ($n_G$) falls below a predetermined threshold.

8. Method according to Claim 7, **characterized in that** the threshold is determined on the basis of a change in the transmission input rotational speed ($n_G$) over time.

9. Method according to Claim 8, **characterized in that** the threshold is set to a relatively high value when the change in the transmission input rotational speed ($n_G$) over time is relatively large.

10. Method according to one of Claims 1 to 9, **characterized in that** the clutch arrangement (20) is activated in step d) in such a way that the clutch arrangement (20) is kept substantially unchanged when the clutch torque ($M_K$) which is transmitted by the clutch arrangement (20) is in the region of the prespecified motor torque ($M_V$).

**Revendications**

1. Procédé de réalisation d'un processus de démarrage sur un système d'entraînement comprenant un moteur d'entraînement (12) et un agencement de boîte de vitesses (26) susceptible d'être mis en liaison par transmission de couple de rotation avec le moteur d'entraînement (12), par l'intermédiaire d'un agencement d'embrayage automatisé (20), le procédé comprenant les étapes de :

   a) sur la base d'une requête du conducteur, détermination d'un couple moteur requis par le conducteur ($M_F$) ou d'une dimension en relation avec ce dernier,

   b) diminution du couple moteur ($M_F$) requis par le conducteur et déterminé dans l'étape a) ou de la dimension en relation avec ce dernier d'un montant différentiel ($\Delta M$) en vue d'obtenir un couple moteur prescrit ($M_V$) ou une dimension en relation avec ce dernier,

   c) placement du couple moteur prescrit ($M_V$) ou de la dimension en relation avec ce dernier en tant que dimension de consigne et activation du moteur d'entraînement (12) de sorte que ce dernier délivre un couple moteur situé dans la fourchette du couple moteur prescrit ($M_V$),

d) déplacement de l'agencement d'embrayage (20) dans la direction d'embrayage,

e) placement du couple moteur requis par le conducteur ($M_F$) ou de la dimension en relation avec ce dernier en tant que dimension de consigne et activation du moteur d'entraînement (12) de sorte que ce dernier délivre un couple moteur situé dans la fourchette du couple moteur requis par le conducteur ($M_F$).

2. Procédé selon la revendication 1, **caractérisé en ce que** le montant différentiel ($\Delta M$) est déterminé sur la base d'une dimension de couple d'inertie du moteur (J) et d'une dimension en relation avec une variation de la vitesse de rotation d'entrée de la boîte de vitesses ($dn_G/dt$).

3. Procédé selon la revendication 1 ou 2, **caractérisé en ce que**, dans l'étape c), le moteur d'entraînement (12) est activé de sorte que la variation du couple moteur dans le temps ne dépasse pas un taux de variation prédéfini.

4. Procédé selon l'une quelconque des revendications 1 à 3, **caractérisé en ce que**, pendant l'étape c), à l'étape d), l'agencement d'embrayage (20) est déplacé dans la direction d'embrayage de sorte qu'un couple d'embrayage ($M_K$) transmis par l'intermédiaire de l'agencement d'embrayage (20) se rapproche du couple moteur prescrit ($M_V$).

5. Procédé selon l'une quelconque des revendications 1 à 4, **caractérisé en ce que**, pendant l'étape c), à l'étape d), l'agencement d'embrayage (20) est activé de sorte que la vitesse de rotation du moteur ($n_M$) se rapproche d'une vitesse de rotation du moteur requise par le conducteur ($n_F$), déterminée sur la base de la requête du conducteur.

6. Procédé selon la revendication 5, **caractérisé en ce que** le rapprochement entre la vitesse de rotation du moteur ($n_M$) et la vitesse de rotation du moteur requise par le conducteur ($n_F$) est effectuée de sorte que, lorsque la vitesse de rotation du moteur ($n_M$) se situe dans la fourchette de la vitesse de rotation requise par le conducteur ($n_F$), la variation de la vitesse de rotation du moteur ($n_M$) dans le temps est de l'ordre de zéro.

7. Procédé selon l'une quelconque des revendications 1 à 6, **caractérisé en ce que**, après l'étape c), l'étape e) est engagée si la différence ($\Delta n$) entre la vitesse de rotation du moteur ($n_M$) et une vitesse de rotation d'entrée de la boîte de vitesses ($n_G$) n'atteint pas un seuil prédéfini.

8. Procédé selon la revendication 7, **caractérisé en ce que** le seuil est déterminé sur la base d'une variation de la vitesse de rotation d'entrée de la boîte de vitesses ($n_G$) dans le temps.

9. Procédé selon la revendication 8, **caractérisé en ce que**, dans le cas d'une variation plus importante de la vitesse de rotation d'entrée de la boîte de vitesses ($n_G$) dans le temps, le seuil est placé sur une valeur plus élevée.

10. Procédé selon l'une quelconque des revendications 1 à 9, **caractérisé en ce que** dans l'étape d), l'agencement d'embrayage (20) est activé de sorte que, si le couple d'embrayage ($M_K$) transmis par l'agencement d'embrayage (20) se situe dans la fourchette du couple moteur prescrit ($M_V$), l'agencement d'embrayage (20) reste maintenu sensiblement constant.

Fig.1

Fig. 2

Fig. 3